# EUROPÄISCHE PATENTSCHRIFT

(11) **EP 1 247 321 B1**
(45) Veröffentlichungstag und Bekanntmachung des Hinweises auf die Patenterteilung: **01.09.2004**
(21) Anmeldenummer: 00993757.4
(22) Anmeldetag: 14.11.2000
(51) Int. Cl.: H02K 1/26, H02K 3/48

(54) **ELEKTRISCHE MASCHINE**
ELECTRICAL MOTOR
MOTEUR ELECTRIQUE

(30) Priorität: 29.12.1999 DE 19963704
(43) Veröffentlichungstag der Anmeldung: 09.10.2002
(73) Patentinhaber: BSH Bosch und Siemens Hausgeräte GmbH, 81739 München (DE)
(72) Erfinder: MÜNZNER, Rainer, 08340 Schwarzenberg (DE); ABEL, Falko, 93047 Regensburg (DE); PERTERMANN, Holger, 01099 Dresden (DE)
(86) Internationale Anmeldenummer: PCT/EP2000/011264
(87) Internationale Veröffentlichungsnummer: WO 2001/050575

(56) Entgegenhaltungen:
- EP-A- 0 297 278
- US-A- 4 859 895
- PATENT ABSTRACTS OF JAPAN vol. 010, no. 319 (E-450), 30. Oktober 1986 (1986-10-30) & JP 61 128740 A (MATSUSHITA ELECTRIC IND CO LTD), 16. Juni 1986 (1986-06-16)
- PATENT ABSTRACTS OF JAPAN vol. 007, no. 084 (E-169), 7. April 1983 (1983-04-07) & JP 58 012550 A (TOKYO SHIBAURA DENKI KK), 24. Januar 1983 (1983-01-24)

## Beschreibung

Die Erfindung bezieht sich auf eine elektrische Maschine mit einem Innenläufer und einem, den Innenläufer umgebenden, mindestens eine Wicklung tragenden Ständerblechpaket mit dem Innenläufer zugewandten Nuten, durch die ein Wicklungsdraht mehrfach hindurchgeführt ist.

Aus der DE 40 37 753 A1 ist eine derartige elektrische Maschine bekannt. Eine derartige Maschine dient beispielsweise als Innenläufermotor zum Antreiben einer Waschmaschine. Dabei hat die elektrische Maschine ein Blechpaket, das aus einer Vielzahl von übereinander geschichteten Blechen aufgebaut ist. Das Blechpaket hat eine zentrale kreisrunde Öffnung, in der sich ein Innenläufer dreht. Dieser ist beispielsweise als Kurzschlußläufer ausgebildet. Um die zentrale Öffnung herum sind zur Mitte der Öffnung hinweisende Nuten angeordnet, die jeweils mit einer Isolierschicht ausgekleidet sind und zur Aufnahme von Wicklungen dienen, die aus Lackdraht gebildet sind. Um eine einfache Bewicklung der Nuten zu ermöglichen, weist jede Nut eine zur Mitte hin weisende Öffnung auf, in die ein Einziehwerkzeug einer Wickelmaschine zuvor zu Spulen aufgeschossene Wicklungen des Wicklungsdrahtes, d. h. des Lackdrahtes, in die Nut einführt.

Der Erfindung liegt die Aufgabe zugrunde, eine elektrische Maschine anzugeben, die bei gleichzeitig einfacher Fertigungsmöglichkeit eine geringere Geräuschentwicklung zeigt.

Diese Aufgabe wird bei einer elektrischen Maschine der eingangs genannten Art dadurch gelöst, daß die Nuten jeweils eine dem Innenläufer zugewandte Öffnung haben, deren lichte Breite kleiner ist als der doppelte Durchmesser des Wicklungsdrahtes, jedoch größer als der einfache Durchmesser des Wicklungsdrahtes.

Aufgrund neuerer Wicklungstechniken ist es möglich, nicht mehr nur mehrere Wicklungsdrähte, also beispielsweise zwei Wicklungsdrähte, gleichzeitig durch die Öffnung in die Nut einzuführen, sondern jeweils nur einen einzigen Wicklungsdraht. Dadurch läßt sich die notwendige Nutöffnung auf ein Minimum zu reduzieren, welches durch den Durchmesser des Lackdrahtes, die Breite der verwendeten Dichtlippen, die als Einführhilfe dienen und Teil des Einziehwerkzeugs sind, sowie die Sicherheitsabstände zwischen dem Lackdraht und den Dichtlippen sowie die Toleranzen festgelegt ist. Unter Berücksichtigung all dieser Umstände ist es nun erfindungsgemäß möglich, die Breite der Öffnung derart zu reduzieren, daß sie nur wenig breiter als der Durchmesser des Lackdrahtes ist, wobei natürlich zusätzlich Platz für die Dichtlippen vorhanden sein muß. Aufgrund der dadurch möglichen geringeren Öffnung der Statornut ergeben sich eine geringere Geräuschentwicklung beim Drehen des Läufers und ein besserer magnetischer Fluß, der über eine größere Länge durch das Eisen des Blechpaketes fließt und einen schmaleren Luftspalt überwinden muß. Dadurch wird ein höherer elektromagnetischer Wirkungsgrad erreicht.

Zusätzlich läßt sich durch das einzelne Einführen des Wicklungsdrahtes in die Nut ein höherer Nutfüllfaktor erzielen. Der Nutfüllfaktor beschreibt das Verhältnis der Gesamtfläche der Wicklungen in eine Nut, bezogen auf die um die Nutisolationsfläche reduzierte Nutfläche. Die Nutisolationsfläche wird durch eine die Nut an ihrer Wand gegenüber dem Blechpaket isolierende Isolationsschicht gebildet. Die Gesamtfläche der Wicklungen berechnet sich aus der Anzahl der leitenden Drahtquerschnitte, d. h. der Seelen des Lackdrahtes, multipliziert mit der den isolierten Lackdraht umspannenden Rechteckfläche. Aufgrund der geringeren Nutöffnung sowie der damit möglichen Einzeldrahteinziehung läßt sich ein Nutfüllfaktor von mindestens 75 % erreiche, wobei ein Nutfüllfaktor von 85 % möglich ist. Die deshalb möglich werdende Verkleinerung der Nutfläche bei vorgegebener Wicklungsquerschnittsfläche erlaubt ein besseres Verhältnis der Fläche des Blechpakets zu den Nutflächen im Bereich zwischen dem Nutgrundradius und dem Nutschlitzradius. Auch hierdurch wird der magnetische Fluß in dem Blechpaket unterstützt. Gleichzeitig kann das Blechpaket auf der Jochseite der Nuten, d. h. das Statorjoch, bezogen auf die Längsachsen der Nuten kürzer ausgebildet sein, wodurch sich Blechmaterial einsparen läßt. Hierdurch ergeben sich auch bessere Streuverhältnisse für den magnetischen Fluß. Somit steigt der Anteil der Eisenfläche einer Nutteilung.

Ein weiterer Vorteil der Erfindung besteht darin, daß sich der Nutgrundradius sowie die Zahnbreite der in den Bereich der Nuten aus dem Blechpaket herausragenden Zähne gegenüber den Nutflächen vergrößern läßt. Auch durch diese Maßnahme verringern sich magnetische Spannungsabfälle im Eisen und Eisenverluste, weil der magnetische Fluß verbessert wird.

Die Höhe der die Öffnungen der Nuten bildenden Stege ist der Höhe der Einziehlippen des Einziehwerkzeugs angepaßt. Die aus der Einziehlippe des Werkzeugs seitlich in die Nut gleitenden Wicklungen dürfen dabei nicht an dem Steg hängenbleiben oder beschädigt werden. Gleichzeitig sind jedoch die Stege so hoch, daß keine magnetischen Sättigungen im Bereich der Zähne des Blechpakets eintreten. Andererseits sind sie im Vergleich zu der Schlitzöffnung der Nut klein genug, um Zahnstreueinflüsse gering zu halten.

Für den leitenden Querschnitt des Wicklungsdrahtes im Bereich der Nut gilt, daß dieser aufgrund seiner Erwärmung den Querschnitt festlegt, und daß durch Feldschwächung bedingte Maximalreaktanzen die Anzahl der Windungen festlegen. Der Querschnitt des Drahtes, d. h. einschließlich einer doppelten Isolationsschicht oder einer Backlackschicht sowie die mit diesen Größen korrelierten Toleranzen legen die Gesamtwickelfläche fest. Im Fall des Einsatzes des Blechpakets für den Innenläufermotor einer Waschmaschine muß die Wicklung zudem an den hohen Drehzahlstellbereich, der bei einer Waschmaschine gefordert wird, optimiert sein. Für eine Waschmaschine kommt beispielsweise eine dreisträngige reihengeschaltete Wicklung zum Einsatz.

Durch die oben beschriebenen Maßnahmen läßt sich somit einerseits der magnetische Fluß verbessern, was zu einer besseren Induktion von Strömen im Läufer führt, und andererseits wird durch die geringere Breite der Schlitz-öffnungen der Nuten die Geräuschentwicklung reduziert. Somit tragen die oben beschriebenen Maßnahmen auch dazu bei, die Geräuschentwicklung oben beschriebenen Maßnahmen auch dazu bei, die Geräuschentwicklung bei einem Innenläufermotor, insbesondere für einen Waschmaschinenantriebsmotor, weiter zu vermindern.

Nachstehend wird die Erfindung in einem Ausführungsbeispiel anhand der Zeichnungen näher erläutert. Es zeigen:
- Fig. 1: eine Draufsicht auf die Oberseite eines Blechpakets ohne Wicklungen und
- Fig. 2: einen Ausschnitt aus dem Blechpaket gemäß Fig. 1 mit einer durch eine Vielzahl von Querschnitten des Wicklungsdrahtes ausgefüllten Nut (stark vergrößert).

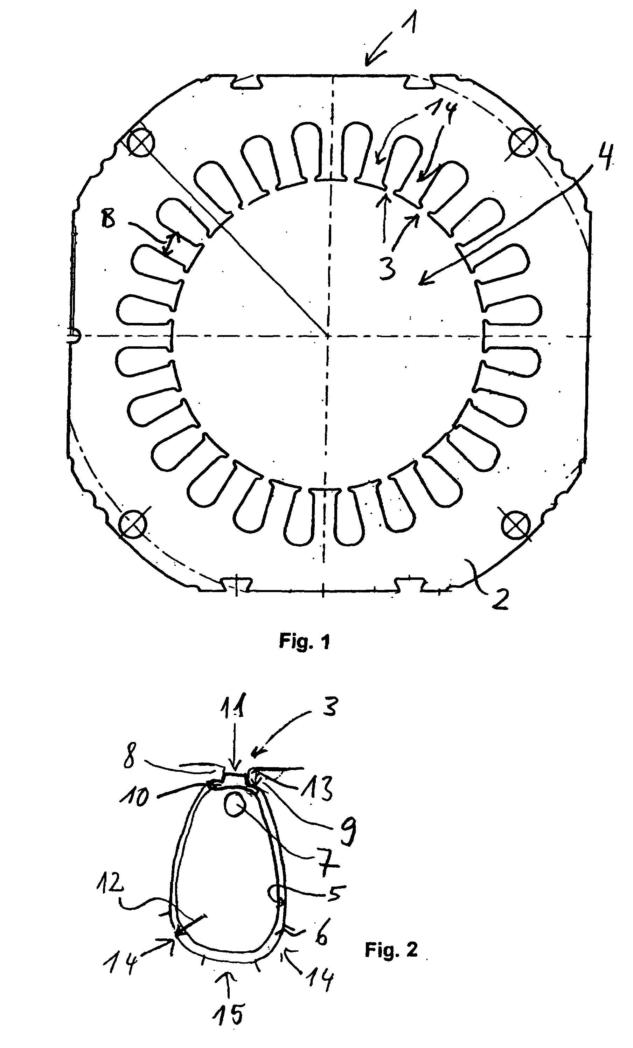

Ein Blechpaket 1 (Fig. 1) ist aus einer Vielzahl von übereinander geschichteten Blechen 2 aufgebaut. Das Blechpaket und somit jedes Blech 2 weist Nuten 3 auf, die um eine zentrale Öffnung 4 in dem Blechpaket 1 herum angeordnet sind. Die Öffnung 4 nimmt einen (hier nicht dargestellten) Läufer auf. Vorzugsweise sind 24 Nuten 3 um die Öffnung 4 herum angeordnet, wobei der Läufer 22 Nuten aufweist. Das Blechpaket 1 bildet zusammen mit einer Wicklung oder einer Mehrzahl von Wicklungen den Ständer einer elektrischen Maschine, beispielsweise eines Motors.

Jede der Nuten 3 ist geformt, wie nachstehend anhand von Fig. 2 näher beschrieben ist. An einer inneren Wandung 5 der Nut 3 ist eine Nutauskleidung 6 aus einem elektrisch isolierenden Material vorhanden. Während des Einbringens eines Wicklungsdrahtes 7 sind auf der Innenseite von Zahnkopfstegen 8, 9 zu einem Wickelwerkzeug gehörige Einführlippen vorhanden, die nach dem Einbringen des Wicklungsdrahtes 7 entfemt werden und durch einen Deckschieber 10 aus einem ebenfalls isolierenden Material ersetzt werden. Dieser verschließt eine Nutschlitzöffnung 11, durch die die Nut 3 während des Einziehen des Wicklungsdrahtes 7 gegenüber der Öffnung 4 geöffnet ist.

Die Nutschlitzöffnung 11 hat eine derartige Breite, daß nur ein einziger Wicklungsdraht 7 mit seinem Querschnitt durch sie hindurchgeführt werden kann. Dabei ist also die lichte Breite der Nutschlitzöffnung 11 so bemessen, daß innerhalb der Nutschlitzöffnung 11 die Einführlippen seitlich an den Zahnkopfstegen 8 und 9 anliegen, während der Wicklungsdraht 7 eingeführt wird. Zwischen dem Wicklungsdraht 7 und den Einführlippen ist noch ein geringer Freiraum vorhanden, um ein Anstoßen und Beschädigen des Wicklungsdrahtes 7 an den Einführlippen zu verhindern.

Der Wicklungsdraht 7 ist seinerseits von einer doppelten Lackschicht oder von einer Backlackschicht umgeben, um ihn elektrisch gegenüber der Umgebung zu isolieren. Aufgrund neuartiger Wickelwerkzeuge ist es nun möglich, lediglich einen einzigen Wicklungsdraht 7 durch die Nutschlitzöffnung 11 hindurchzuführen, wodurch diese eine entsprechend geringe Breite haben kann. Die Nutschlitzöffnung 11 ist kleiner als der doppelte Durchmesser des Wicklungsdrahtes 7, jedoch breiter als der einfache Durchmesser des Wicklungsdrahtes 7 (einschließlich der ihn umgebenden Lack- oder Isolierschichten). Dadurch ergibt sich eine verbesserte Verteilung des magnetischen Feldes im Luftspalt, verbunden mit einem höheren magnetischen Fluß durch den Luftspalt hindurch, was einen höheren Wirkungsgrad für die Maschine bedeutet und infolge der dadurch verbesserten Einführungsmöglichkeit des Wicklungsdrahtes 7 in die Nut 3 eine bessere Nutfüllung bewirkt.

Die Nutfüllung wird auch dadurch erhöht, daß der Nutgrundradius 12 größer ist als der Radius des Wicklungsdrahtes 7, vorzugsweise ist der Nutgrundradius größer als das Fünffache des Radius des Wicklungsdrahtes 7. Durch den gegenüber herkömmlichen Nuten grösseren Nutgrundradius 12 ergibt sich an den jochseitigen Ecken der Nut 3 jeweils ein gekrümmter Bereich 14, der größer ist als bei bekannten Nuten. Durch diese Maßnahme wird ein gleichmäßigerer Verlauf des magnetischen Flusses in dem Blech 2 erzielt. Der Nutgrundradius 12 ist vorzugsweise so gewählt, daß die Bereiche 14 jeweils länger sind als eine Nutgrundlänge 15.

Der Zahnkopfsteg 8 hat eine Höhe, die ebenfalls vorzugsweise ein Mehrfaches des Radius des Wicklungsdrahtes 7 trägt.

Die Breite B (Fig. 1) von Zähnen 14 des Blechpakets 1, die die Nuten 3 voneinander trennen, beträgt mindestens 80 % der Breite der Nuten 3. Vorzugsweise ist die Breite der Zähne 14 noch größer und überschreitet die Breite der Nuten 3.

## Patentansprüche

1. Elektrische Maschine mit einem Innenläufer und einem, den Innenläufer umgebenden, mindestens eine Wicklung tragenden Blechpaket (1) mit dem Innenläufer zugewandten Nuten (3), durch die ein Wicklungsdraht (7) mehrfach hindurchgeführt ist, wobei die Nuten (3) jeweils eine dem Innenläufer zugewandte Nutschlitzöffnung (11) haben, **dadurch gekennzeichnet, dass** die lichte Breite der Nutschlitzöffnung (11) kleiner ist als der doppelte Durchmesser des Wicklungsdrahtes (7), jedoch größer als der einfache Durchmesser des Wicklungsdrahtes (7).

2. Maschine nach Anspruch 1, **dadurch gekennzeichnet, dass** die Nuten (3) einen Nutgrundradius (12) haben, der das Mehrfache des Radius des Wicklungsdrahtes (7) beträgt.

3. Maschine nach Anspruch 1 oder 2, **dadurch gekennzeichnet, dass** jede Nut (3) an ihren der Nutschlitzöffnung gegenüberliegenden Seiten mit einem Nutgrundradius (12) gekrümmte Bereiche (14) hat die jeweils größer sind als eine Nutgrundlänge (15) zwischen den Bereichen (14).

4. Maschine nach einem der Ansprüche 1 bis 3, **dadurch gekennzeichnet, dass** die Nuten (3) an ihrer Öffnung Stege (8) aufweisen, deren radial zu dem Innenläufer gerichteten Höhe (13) mindestens dem einfachen Durchmesser des Wicklungsdrahtes (7) entspricht.

5. Maschine nach einem der Ansprüche 1 bis 4, **dadurch gekennzeichnet, dass** die Breite von Zähnen (16) des Blechpakets (1) mindestens 80 % der Breite der Nuten (3) beträgt, wobei deren Breite in der Mitte ihrer radial zu dem Innenläufer gerichteten Länge gemessen ist.

6. Maschine nach einem der Ansprüche 1 bis 5, **dadurch gekennzeichnet, dass** die Nut (3) einen Nutfüllfaktor von mindestens 75 % aufweist.

## Claims

1. Electrical machine with an inner rotor and a stator lamination stack (1), which surrounds the inner rotor and carries at least one winding, with grooves (3) which face the inner rotor and through which a winding wire (7) is multiply guided, wherein the grooves (3) each have a groove slot opening (11) facing the inner rotor, **characterised in that** the clear width of the groove slot opening (11) is less than twice the diameter of the winding wire (7), but more than just the diameter of the winding wire (7).

2. Machine according to claim 1, **characterised in that** the grooves (3) have a groove base radius (12) which amounts to a multiple of the radius of the winding wire (7).

3. Machine according to claim 1 or 2, **characterised in that** each groove (3) has, at its sides opposite the groove slot opening, regions (14) which are curved by a groove base radius (12) and which are each larger than a groove base length (15) between the regions (14).

4. Machine according to one of claims 1 to 3, **characterised in that** the grooves (3) have webs (8) at their opening, the height (13), which is oriented radially with respect to the inner rotor, of the webs corresponding with at least a single diameter of the winding wire (7).

5. Machine according to one of claims 1 to 4, **characterised in that** the width of teeth (16) of the stator lamination stack (1) amounts to at least 80 of the width of the grooves (3), wherein the width thereof is measured in the centre of their length oriented radially with respect to the inner rotor.

6. Machine according to one of claims 1 to 5, **characterised in that** the groove (3) has a groove filling factor of at least 75%.

## Revendications

1. Moteur électrique équipé d'un rotor intérieur et d'un paquet de tôles (1) entourant le rotor intérieur et portant au moins un enroulement, muni d'encoches (3) orientées vers le rotor intérieur, à travers lesquelles un fil d'enroulement (7) est passé à plusieurs reprises, les encoches (3) ayant chacune une ouverture de fente d'encoche (11) orientées vers le rotor intérieur, **caractérisé en ce que** la largeur intérieure de l'ouverture de la fente de l'encoche (11) est inférieure à deux fois le diamètre de fil d'enroulement (7), tout en étant supérieure au simple diamètre du fil d'enroulement (7).

2. Moteur selon la revendication 1, **caractérisé en ce que** les encoches (3) ont un rayon de fond d'encoche (12) équivalent à plusieurs fois le rayon du fil d'enroulement (7).

3. Moteur selon la revendication 1 ou 2, **caractérisé en ce que** chaque encoche (3) présente des zones courbes (14) au niveau de leur face opposée à l'ouverture de la fente de l'encoche avec un rayon de fond d'encoche (12), qui sont chacune supérieures à une longueur de fond d'encoche (15) entre les zones (14).

4. Moteur selon l'une des revendications 1 à 3, **caractérisé en ce que** les encoches (3) présentent au niveau de leur ouverture des barrettes (8) dont la hauteur (13) orientée radialement au rotor intérieur correspond au moins au simple diamètre du fil d'enroulement (7).

5. Moteur selon l'une des revendications 1 à 4, **caractérisé en ce que** la largeur des dents (16) du paquet de tôles (1) équivaut à au moins 80 % de la largeur des encoches (3), dont la largeur est mesurée au centre de leur longueur orientée radialement vers le rotor intérieur.

6. Moteur selon l'une des revendications 1 à 5, **caractérisé en ce que** l'encoche (3) présente un facteur de remplissage des encoches d'au moins 75 %.
